# EUROPEAN PATENT APPLICATION

(11) **EP 4 723 078 A1**
(43) Date of publication of application: **08.04.2026**
(21) Application number: 24822652.4
(22) Date of filing: 07.06.2024
(51) Int. Cl.: G08G 1/123, G08G 1/14

(54) **VEHICLE LOCATION PROMPTING METHOD AND TERMINAL DEVICE**

(30) Priority: 16.06.2023 CN 202310717970
(71) Applicant: Huawei Technologies Co., Ltd., Shenzhen, Guangdong 518129 (CN)
(72) Inventor: LI, Jian, Shenzhen, Guangdong 518129 (CN); GAO, Yunpeng, Shenzhen, Guangdong 518129 (CN); CHEN, Shengyang, Shenzhen, Guangdong 518129 (CN); LIU, Qiangbo, Shenzhen, Guangdong 518129 (CN); LI, Wei, Shenzhen, Guangdong 518129 (CN)
(74) Representative: Thun, Clemens
(86) International application number: PCT/CN2024/098032
(87) International publication number: WO 2024/255702

(57) **Abstract**

A vehicle location prompt method is provided, and may be applied to a terminal device. The method includes: obtaining, based on network quality of a communication network between a vehicle associated with the terminal device and the terminal device, at least one type of parking data that matches the network quality from the vehicle, where the parking data at least indicates a location of the vehicle in a parking lot, different parking data has different transmission priorities, and the transmission priority is associated with the network quality; and displaying a first interface in response to a received view operation of a user for the location of the vehicle, where the first interface includes information expressed by the parking data obtained by the terminal device. In this way, after the user parks the vehicle in the parking lot, the user can view, on the terminal device used by the user, the parking data of the vehicle in the parking lot. This enables the user to quickly learn of the location of the vehicle in the parking lot, and then quickly find the vehicle.

## Description

This application claims priority to Chinese Patent Application No. 202310717970.2, filed with the China National Intellectual Property Administration on June 16, 2023 and entitled "VEHICLE LOCATION PROMPT METHOD AND TERMINAL DEVICE", which is incorporated herein by reference in its entirety.

### TECHNICAL FIELD

This application relates to the field of information technologies (information technology, IT), and in particular, to a vehicle location prompt method and a terminal device.

### BACKGROUND

Generally, when an environment in a parking lot is complex, it is difficult for a user to quickly find a vehicle parked by the user in the parking lot. For example, the parking lot has a plurality of parking floors, each floor is usually divided into a plurality of areas, and each floor usually has a plurality of pillars. In this case, the environment in the parking lot is complex. Consequently, it is often difficult for the user to find the vehicle in an indoor parking lot. Therefore, when the vehicle is parked in a parking lot, how to enable the user to conveniently find the vehicle is an urgent technical problem to be resolved.

### SUMMARY

This application provides a vehicle location prompt method, a terminal device, a computer storage medium, and a computer product, so that a user can conveniently find a vehicle after parking in a parking lot.

According to a first aspect, this application provides a vehicle location prompt method. The method may be applied to a terminal device like a mobile phone. The method may include: obtaining, based on network quality of a communication network between a vehicle associated with the terminal device and the terminal device, at least one type of parking data that matches the network quality from the vehicle, where the parking data at least indicates a location of the vehicle in a parking lot, different parking data has different transmission priorities, and the transmission priority is associated with the network quality; and displaying a first interface in response to a received view operation of a user for a location of the vehicle, where the first interface includes information expressed by the parking data obtained by the terminal device.

In this way, after the user parks the vehicle in the parking lot, the user can view, on the terminal device used by the user, the parking data of the vehicle in the parking lot. This enables the user to quickly learn of a location of the vehicle in the parking lot, and then quickly find the vehicle.

In a possible implementation, when the network quality of the communication network between the vehicle associated with the terminal device and the terminal device meets a first condition, the parking data obtained by the terminal device includes a traveling trajectory of the vehicle in the parking lot, location coordinates of the vehicle in the parking lot, a floor and/or an area of the vehicle in the parking lot, a floor through which the vehicle passes when traveling in the parking lot, a key frame, and a highlight playback video when the vehicle travels in the parking lot. When the network quality of the communication network between the vehicle associated with the terminal device and the terminal device meets a second condition, the parking data obtained by the terminal device includes one or more of the following: a traveling trajectory of the vehicle in the parking lot, location coordinates of the vehicle in the parking lot, a floor and/or an area of the vehicle in the parking lot, a floor through which the vehicle passes when traveling in the parking lot, or a key frame, and the network quality indicated by the first condition is higher than the network quality indicated by the second condition, where the key frame includes one or more of a parking space frame, a floor frame, and an area frame, the parking space frame is an image that is of surroundings of the vehicle and that includes an identifier that is capable of indicating the location of the vehicle, the floor frame is an image including an identifier of a floor on which the vehicle is, and the area frame is an image including an identifier of an area in which the vehicle is. For example, the first condition and the second condition described above may be related to time of transmitting information. For example, the first condition is met when the time of transmitting information is less than preset time, and the second condition is met when the time of transmitting information is greater than or equal to the preset time. In addition, the first condition and the second condition may also be related to a quality of a network signal on the terminal device. For example, the first condition is met when a quantity of bars or bar icons in a signal bar or signal strength indicator indicating network signal strength on the terminal device exceeds a preset quantity, and the second condition is met when the quantity of bars or bar icons in the signal bar or signal strength indicator indicating the network signal strength on the terminal device is less than the preset quantity. Alternatively, the first condition is met when the network signal strength of the terminal device is greater than a preset threshold, and the second condition is met when the network signal strength of the terminal device is less than the preset threshold. The first condition and the second condition may also be related to a distance between the vehicle and the terminal device. For example, the first condition is met when the distance between the terminal device and the vehicle is less than a preset distance, and the second condition is met when the distance between the terminal device and the vehicle is greater than or equal to the preset distance.

In this way, when the network quality of the communication network between the terminal device and the vehicle varies, the user may view different parking data on the terminal device, so that the user can learn of location information of the vehicle in different network quality, and the user can quickly find the vehicle in different network quality.

In a possible implementation, when the network quality of the communication network between the vehicle associated with the terminal device and the terminal device meets a first sub-condition in the second condition, the parking data obtained by the terminal device includes the traveling trajectory of the vehicle in the parking lot, the location coordinates of the vehicle in the parking lot, the floor and/or the area of the vehicle in the parking lot, the floor through which the vehicle passes when traveling in the parking lot, and the key frame. In this way, when the network quality of the communication network between the vehicle associated with the terminal device and the terminal device is not very good, the user can also view most of the parking data, so that the user can quickly find the vehicle under the corresponding network quality.

In a possible implementation, when the network quality of the communication network between the vehicle associated with the terminal device and the terminal device meets a second sub-condition in the second condition, the parking data obtained by the terminal device includes the traveling trajectory of the vehicle in the parking lot, the location coordinates of the vehicle in the parking lot, the floor and/or the area of the vehicle in the parking lot, and the parking space frame, where network quality indicated by the second sub-condition is lower than network quality indicated by the first sub-condition.

When the network quality of the communication network between the vehicle associated with the terminal device and the terminal device meets a third sub-condition in the second condition, the parking data obtained by the terminal device includes the traveling trajectory of the vehicle in the parking lot, the location coordinates of the vehicle in the parking lot, and the floor and/or the area of the vehicle in the parking lot, where network quality indicated by the third sub-condition is lower than the network quality indicated by the second sub-condition.

When the network quality of the communication network between the vehicle associated with the terminal device and the terminal device meets a fourth sub-condition in the second condition, the parking data obtained by the terminal device includes the floor and/or the area of the vehicle in the parking lot, and/or the location coordinates of the vehicle in the parking lot, where network quality indicated by the fourth sub-condition is lower than the network quality indicated by the third sub-condition.

In this way, when the network quality of the communication network between the terminal device and the vehicle varies, the user may view different parking data on the terminal device, so that the user can learn of location information of the vehicle in different network quality, and the user can quickly find the vehicle in different network quality.

In a possible implementation, when the network quality of the communication network between the vehicle associated with the terminal device and the terminal device meets the first condition, the first interface includes a first area, a second area, a third area, a fourth area, and a fifth area. A map is displayed in the first area, and the traveling trajectory of the vehicle in the parking lot and the location coordinates of the vehicle in the parking lot are marked on the map. A floor stepped diagram is displayed in the second area, and the floor stepped diagram indicates a traveling distance of the vehicle on a floor in the parking lot and a floor on which the vehicle is. The floor and/or the area of the vehicle in the parking lot are/is displayed in the third area. A frame of image included in the key frame is displayed in the fourth area, and an image switching control used to switch an image included in the key frame is displayed when the key frame includes a plurality of frames of images. A timeline of the highlight playback video is displayed in the fifth area, and a time adjustment control is configured on the timeline. The time adjustment control is used to adjust time of the highlight playback video. The highlight playback video is displayed in the fourth area. In this way, the parking data of the vehicle is displayed on a display interface of the terminal device, so that the user can intuitively learn of a location of the vehicle, and therefore the user can quickly find the vehicle.

In addition, when the network quality of the communication network between the vehicle associated with the terminal device and the terminal device meets the second condition, the first interface includes at least one of the first area, the second area, the third area, and the fourth area.

In a possible implementation, when the first interface includes the fourth area, and the key frame includes a plurality of frames of images, the image switching control includes a first control and/or a second control, and a third control. The first control is used to view the area frame, the second control is used to view the floor frame, and the third control is used to view the parking space frame. In this way, the user can view different key frames by using different controls, thereby improving user experience.

In a possible implementation, when the first interface includes the fifth area, the method may further include: in response to a movement operation of the user for the time adjustment control, marking, on the traveling trajectory displayed in the first area, a location of the vehicle at a first moment corresponding to a location of the time adjustment control, and displaying, in the fourth area, an image of the vehicle traveling in the parking lot at the first moment; and/or displaying an indicator in the floor stepped diagram displayed in the second area, where the indicator indicates a location of the vehicle in the floor stepped diagram at the first moment. In this way, when viewing the highlight playback video, the user can observe a location and/or a floor of the vehicle at a moment when the highlight playback video is being played, thereby improving user experience.

In a possible implementation, when the first interface includes the first area and the second area, traveling trajectory identifiers of traveling trajectories of the vehicle on different floors in the parking lot in the first area are different, floor trajectory identifiers of different floors included in the floor stepped diagram in the second area are different, and the traveling trajectory identifier and the floor trajectory identifier that correspond to a same floor are the same. In this way, the user can intuitively learn of traveling statuses of the user on different floors and traveling trajectories of the user on different floors, thereby improving user experience.

In a possible implementation, when the first interface includes the first area, one or more of the following are further marked on the map: at least a part of facilities in a building to which the parking lot belongs, or a first traveling route from a location of the user to a location of the vehicle, or at least a part of facilities on the first traveling route, or the location of the user, or a second traveling route from the location of the user to a target facility in the building, where the target facility is used for leaving/entering the parking lot. In this way, through this marking manner, the user can learn of a facility arrangement of the building in which the parking lot is located, or a path for leaving/entering the parking lot, so that the user can quickly leave/enter the parking lot, thereby improving user experience.

In a possible implementation, in the highlight playback video, a resolution of a first image frame is greater than a resolution of a second image frame. The first image frame includes one or more of a floor change frame, a steering frame, or the key frame. The floor change frame is an image that is capable of indicating a floor change. The steering frame is an image that is capable of indicating vehicle steering. The second image frame is a frame other than the first image frame in the highlight playback video. In this way, a size of the highlight playback video can be reduced to a greatest extent, so that the highlight playback video can be quickly transmitted to the terminal device.

In a possible implementation, the highlight playback video is obtained by sampling a complete video of the vehicle traveling in the parking lot, and in the complete video, a sampling frequency of a third image frame is greater than a sampling frequency of a fourth image frame. The third image frame is a frame that includes a floor identifier/an area identifier and in which a confidence level of the floor identifier/area identifier is greater than a preset confidence level. The fourth image frame is a frame that does not include the floor identifier/area identifier or in which the confidence level of the floor identifier/area identifier is less than the preset confidence level. In this way, some unimportant pictures can be deleted, so that a size of the highlight playback video can be further reduced to a greatest extent, and the highlight playback video can be quickly transmitted to the terminal device.

According to a second aspect, this application provides a video processing method, including: sampling an image frame in a first video based on a confidence level of an object in the image frame in the first video, to obtain a plurality of image frames, where a sampling frequency of a first image frame in the first video is less than a sampling frequency of a second image frame, a confidence level of an object in the first image frame is less than a preset confidence level, and a confidence level of an object in the second image frame is greater than the preset confidence level; reducing a resolution of the first image frame in the plurality of image frames, increasing a resolution of the second image frame, and compressing the plurality of image frames to obtain a second video; and outputting the second video. In this way, because a data amount of the second video is less than a data amount of the first video, and main content included in the second video is the same as main content included in the first video, the second video can be transmitted to a terminal device used by a user at a high speed, so that the user can quickly learn of content included in the first video through the second video as soon as possible, thereby improving user experience.

According to a third aspect, this application provides a terminal device, including: at least one memory, configured to store a program; and at least one processor, configured to execute the program stored in the memory. When the program stored in the memory is executed, the processor is configured to perform the method described in the first aspect or the second aspect.

According to a fourth aspect, this application provides a computer-readable storage medium, and the computer-readable storage medium stores a computer program. When the computer program is executed on a processor, the processor is caused to perform the method described in the first aspect or the second aspect.

According to a fifth aspect, this application provides a computer program product. When the computer program product is run on a processor, the processor is caused to perform the method described in the first aspect or the second aspect.

It may be understood that, for beneficial effects of the third aspect to the fifth aspect, reference may be made to related descriptions in the first aspect or the second aspect. Details are not described herein again.

### BRIEF DESCRIPTION OF DRAWINGS

The following briefly describes the accompanying drawings used in descriptions of embodiments or the conventional technology.
FIG. 1 is a diagram of an architecture of a vehicle location prompt system according to an embodiment of this application;
FIG. 2 is a diagram of a hardware structure of a vehicle according to an embodiment of this application;
FIG. 3 is a diagram of a floor height change when a vehicle travels in an indoor parking lot according to an embodiment of this application;
FIG. 4 is a diagram of an image captured by a camera inside a vehicle when the vehicle travels according to an embodiment of this application;
FIG. 5 is a diagram of a hardware structure of a terminal device according to an embodiment of this application;
FIG. 6 is a diagram of an architecture of another vehicle location prompt system according to an embodiment of this application;
FIG. 7 is a schematic flowchart of a vehicle location prompt method according to an embodiment of this application;
FIG. 8(A) to FIG. 8(C) are diagrams of display interfaces on a terminal device according to an embodiment of this application;
FIG. 9(A) to FIG. 9(C) are diagrams of a change of a key frame in an interface displayed by a terminal device according to an embodiment of this application; and
FIG. 10(A) to FIG. 10(D) are diagrams of comparison between different information displayed in a display interface on a terminal device when network quality of a communication network between the terminal device and a vehicle varies according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, a word "example", "for example", or the like is used to give an example, an illustration, or a description. Any embodiment or design solution described as "example" or "for example" in embodiments of this application should not be explained as being more preferred or having more advantages than another embodiment or design solution. To be precise, use of the word such as "example" or "for example" is intended to present a relative concept in a specific manner.

In the descriptions of embodiments of this application, unless otherwise specified, "a plurality of' means two or more. For example, a plurality of processing units are two or more processing units, and a plurality of elements are two or more elements.

It should be noted that embodiments of this application mainly provide a vehicle location prompt method. In the method, a terminal device may obtain, based on network quality (for example, a bandwidth, a delay, a packet loss rate, a peak time ratio, availability, or a throughput) of a communication network between the terminal device and the vehicle associated with the terminal device, at least one type of parking data that matches the current network quality from the vehicle. The parking data may indicate a location of the vehicle in a parking lot. In addition, different parking data has different transmission priorities, and the transmission priority is associated with the network quality of the communication network between the terminal device and the vehicle. Then, after obtaining an operation of viewing a location of the vehicle by a user, the terminal device may display information expressed by the received parking data. In this way, the user can intuitively learn of the location of the vehicle in the parking lot based on the information presented by the terminal device, and quickly find the vehicle in the parking lot. For details, refer to the following detailed descriptions.

The following provides a detailed description of the vehicle location prompt scheme provided in embodiments of this application.

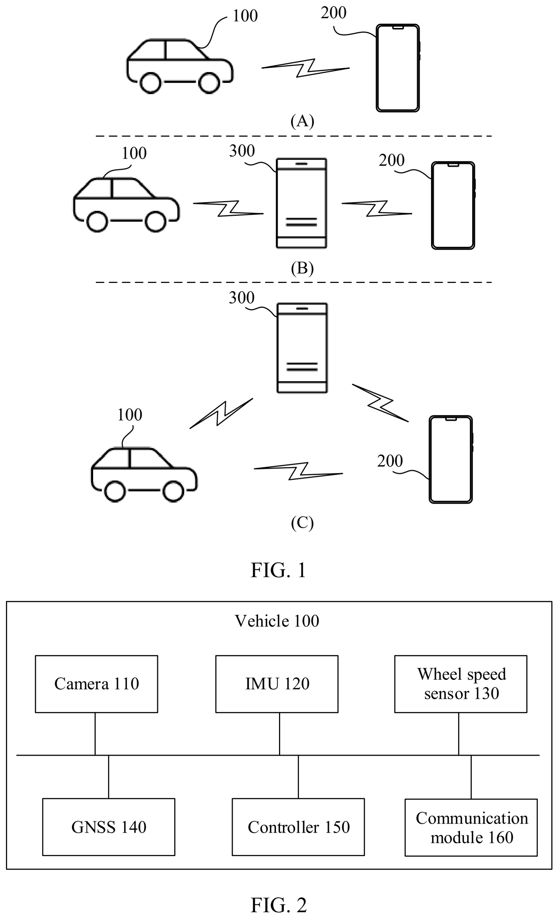

For example, FIG. 1 is a diagram of an architecture of a vehicle location prompt system according to an embodiment of this application. As shown in (A) in FIG. 1, the vehicle location prompt system may include a vehicle 100 and a terminal device 200. The vehicle 100 and the terminal device 200 may establish a communication connection through a wired network (for example, a data cable) or a wireless network (for example, Bluetooth (Bluetooth) or near field communication (near field communication, NFC)). In this system architecture, the vehicle 100 and the terminal device 200 may directly communicate with each other. In addition, in the system architecture, the vehicle 100 and the terminal device 200 may be in a same system ecosystem (for example, a HarmonyOS ecosystem or an iOS ecosystem). In this way, the vehicle 100 and the terminal device 200 can communicate with each other at a high communication speed in the same ecosystem. For details about the vehicle 100 and the terminal device 200, refer to the following descriptions.

As shown in (B) in FIG. 1, the vehicle location prompt system may include the vehicle 100, the terminal device 200, and a server 300. The vehicle 100 may establish a communication connection to the server 300 through a network, and the terminal device 200 may also establish a communication connection to the server 300 through a network. In this system architecture, the vehicle 100 may indirectly communicate with the terminal device 200 through the server 300. The server 300 may be a central server, an edge server, a cloud server, or the like. A specific type of the server 300 is not limited in this embodiment of this application.

As shown in (C) in FIG. 1, the vehicle location prompt system may also include the vehicle 100, the terminal device 200, and the server 300. The vehicle 100 may establish a communication connection to the server 300 through a network, and the terminal device 200 may also establish a communication connection to the server 300 through a network. In addition, the vehicle 100 and the terminal device 200 may also establish a connection through a network. In this system architecture, the vehicle 100 may indirectly communicate with the terminal device 200 through the server 300, or may directly communicate with the terminal device 200. In addition, in the system architecture, a part of data in the vehicle 100 may be directly transmitted to the terminal device 200 through a network, and another part of data may be indirectly transmitted to the terminal device 200 through the server 300.

As shown in FIG. 2, in the vehicle location prompt system shown in FIG. 1, the vehicle 100 may include a camera 110, an inertial measurement unit (inertial measurement unit, IMU) 120, a wheel speed sensor 130, a GNSS 140, a controller 150, and a communication module 160. The camera 110 is mainly configured to capture a static image or a video in front of the vehicle 100. The camera 110 may be installed on a front windshield of the vehicle 100, or may be installed at another position of the vehicle 100. This is not limited herein. The IMU 120 is mainly configured to measure an acceleration signal and an angular velocity signal of the vehicle 100 in three-dimensional space, and the IMU 120 may mainly include an accelerometer and a gyroscope. The accelerometer is mainly configured to detect an acceleration signal of the vehicle 100 in three-dimensional space. The gyroscope is mainly configured to detect an angular velocity signal of the vehicle 100 in three-dimensional space. The wheel speed sensor 130 is mainly a sensor configured to measure a wheel rotation speed of the vehicle 100. The GNSS 140 is mainly configured to position the vehicle 100 outdoors.

The controller 150 may be configured to determine, based on signal strength of the GNSS 140, whether the vehicle 100 travels into an indoor parking lot. Specifically, when the vehicle 100 enters an indoor parking lot, signal strength (for example, a carrier-to-noise ratio or a signal-to-noise ratio) of the GNSS 140 is usually less than a preset value due to impact of an indoor space. Therefore, when the signal strength of the GNSS 140 is less than the preset value, the controller 150 may determine that the vehicle 100 travels into an indoor parking lot. The controller 150 may also compute, by using algorithms such as mileage computing and sensor fusion, data measured by the IMU 120, data measured by the wheel speed sensor 130, and the like, and obtain a traveling trajectory of the vehicle 100 in the indoor parking lot with reference to a positioning result of the GNSS 140. In addition, the controller 150 may alternatively compute, by using an algorithm like sensor fusion, data measured by the IMU 120 and data measured by the wheel speed sensor 130, to obtain a traveling height change of the vehicle 100 in the indoor parking lot and a corresponding change moment. In this way, the traveling height change and the traveling trajectory are combined, so that a traveling trajectory of the vehicle 100 on a floor, a time period in which the vehicle 100 is in a floor change area, and a floor on which the vehicle 100 is in each time period can be learned of.

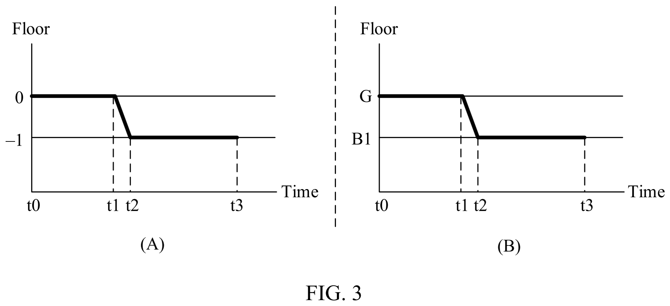

In addition, when the vehicle 100 travels in the indoor parking lot, the controller 150 may further analyze and process, by using a neural network (neural network, NN) or the like, an image collected by the camera 110, to obtain location information (namely, a floor and/or an area) of a current location of the vehicle 100 in the indoor parking lot in a traveling process of the vehicle 100. Certainly, when the vehicle 100 is currently located at a parking space (for example, a gear of the vehicle is a parking gear (P gear)), the controller 150 may also analyze and process, by using the NN or the like, an image collected by the camera 110 in a traveling process of the vehicle 100, to obtain location information (namely, a floor and/or an area) of the parking space in which the vehicle 100 is located. In addition, after a floor on which the vehicle 100 is currently is computed by using the NN, a real floor change status of the vehicle 100 in the indoor parking lot may be obtained with reference to the floor and a traveling height change status computed by using an algorithm like sensor fusion. For example, when the sensor fusion algorithm or the like is used for computing, the ground may be used as a layer 0. When the vehicle 100 descends one layer, that the vehicle 100 is at a layer -1 may be computed. In this case, a drawn floor stepped diagram is shown in (A) in FIG. 3. In FIG. 3, if the floor computed by using the NN is a B1 floor in this case, -1 in a traveling height change diagram drawn based on an algorithm like sensor fusion may be replaced with B1, 0 may be replaced with G. After the replacement, a floor stepped diagram shown in (B) in FIG. 3 is obtained.

In this embodiment, when the vehicle is currently located at the parking space in the indoor parking lot, the controller 150 may also process, by using the NN or the like, a video that is collected by the camera 110 and in which the vehicle 100 travels on a floor on which the parking space of the vehicle 100 is located, to select a key frame from the video. In addition, a complete video of the vehicle 100 traveling in the indoor parking lot is compressed, to obtain a highlight playback video, so that the user can learn of a traveling process of the vehicle 100 in the indoor parking lot through the highlight playback video. The key frame is an image that includes information that can help locate a vehicle. The key frame may include a parking space frame, an area frame, and a floor frame. The parking space frame is an image that is of surroundings of a parking space and that includes an identifier that is capable of indicating a parking space location. The floor frame is an image including an identifier of a floor on which the parking space is located. The area frame is an image including an identifier of an area in which the parking space is located. The highlight playback video can indicate a traveling process of the vehicle in the indoor parking lot. The following describes key frame selection and highlight playback video generation.

### (1) Key frame selection

The key frame selection mainly includes three steps: pre-selection of a consecutive frame, check of a consecutive frame, and key frame selection. The following describes the three steps.

### (a) Pre-selection of a consecutive frame

In a step of the pre-selection of the consecutive frame, at least one consecutive frame segment is pre-selected from a collected video when the vehicle 100 travels on a floor on which a parking space of the vehicle 100 is located. Each continuous frame segment includes a plurality of continuous image frames (which may also be referred to as "pictures"), and these continuous image frames include same identifiers. For example, each of the continuous image frames has a floor identifier "B1", or each of the continuous image frames has an area identifier "Z", or each of the continuous image frames has an identifier "pillar" that is capable of indicating a parking space location. In addition, in a continuous frame segment, a confidence level of an identifier included in each image frame is greater than a preset confidence level, to improve accuracy of selecting a key frame.

### (b) Check of a continuous frame

In a step of the check of a consecutive frame, the image frames in each consecutive frame segment are checked, to determine whether a common identifier that exists in all image frames in a continuous frame segment is different presentation of the identifier at a location in an indoor parking lot. In a process of checking a continuous frame segment, if it is found that a common identifier that exists in all image frames in the continuous frame segment is not different presentation of the identifier at a location in an indoor parking lot, the continuous frame segment may be discarded. In a process of checking a continuous frame segment, if it is found that a common identifier that exists in all image frames in the continuous frame segment is different presentation of the identifier at a location in an indoor parking lot, the continuous frame segment may be retained.

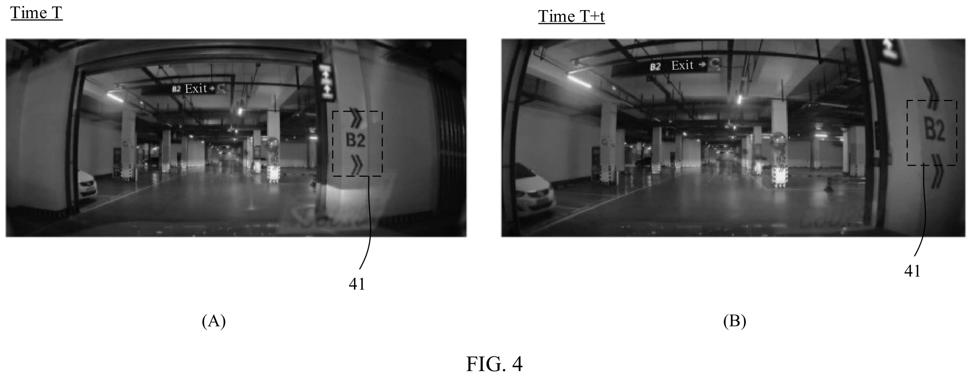

When a continuous frame segment is checked, it may be checked whether a common identifier that exists in all image frames in the continuous frame segment is located at a same location, whether a change direction is consistent, and whether the change direction is consistent with a steering direction of a vehicle. If the foregoing is consistent, it may be determined that a common identifier that exists in all image frames in the continuous frame segment is different presentation of the identifier at a location in the indoor parking lot. In this case, the continuous frame segment may be retained. For example, it is assumed that there are two image frames in a continuous frame segment. As shown in FIG. 4, the vehicle 100 in FIG. 4 is traveling in a straight line. (A) in FIG. 4 is an image frame at a time T, and (B) in FIG. 4 is an image frame at a time T+t. It can be learned by comparing the two image frames that a change direction of an identifier in an area 41 of the vehicle 100 when the vehicle 100 travels in the straight line is monotonically moving toward a side edge of the image. At the same time, because the vehicle is going straight, there is no steering. In addition, in FIG. 4, the identifier in the area 41 in the two image frames is located on a same wall. Therefore, the identifier in the area 41 in the two image frames is located at a same location. Therefore, the continuous frame segment corresponding to the two image frames in FIG. 4 may be retained. It should be understood that, when the vehicle turns, a common identifier in image frames in a continuous frame segment should also monotonically move in a direction the same as a steering direction of the vehicle. For example, when the vehicle turns right, the common identifier in the image frames in the continuous frame segment should also monotonically move rightward.

In addition, when a continuous frame segment is checked, it may also be checked whether an area change of a common identifier that exists in image frames in the continuous frame segment is consistent with a traveling direction of the vehicle. For example, when the vehicle moves straight, an area of the common identifier that exists in the image frames in the continuous frame segment should continuously increase. When the vehicle reverses, the area of the common identifier that exists in the image frames in the continuous frame segment should continuously decrease.

### (c) Key frame selection

In a step of the key frame selection, a key frame is mainly selected from the consecutive frame segment retained after check. During selection, an image frame that has a highest confidence level and that includes an identifier that is capable of indicating a parking space location may be used as a parking space frame, an image frame that has a highest confidence level and that includes a floor identifier may be used as a floor frame, and an image frame that has a highest confidence level and that includes an area identifier may be used as an area frame.

### (2) Highlight playback video generation

For generating a highlight playback video, non-uniform thinning may be first performed on the video based on a confidence level of an identifier in each image frame included in the video when the vehicle 100 travels in the indoor parking lot, and then dynamic resolution compression is performed on an image frame obtained through non-uniform thinning, to obtain the highlight playback video. The following separately describes two steps: "non-uniform thinning" and "dynamic resolution compression".

### (a) Non-uniform thinning

The non-uniform thinning is mainly performed on the image frame in the video based on the confidence level of the identifier in the image frame in the video. During sampling, a sampling frequency of the image frame that does not include an identifier in a parking lot (for example, a floor identifier/an area identifier) is reduced, and/or a sampling frequency of the image frame corresponding to an identifier (for example, a floor identifier/an area identifier) with a low confidence level is reduced. In addition, a sampling frequency of the image frame corresponding to an identifier with a high confidence level is increased, and the selected key frame is used as an image frame that needs to be sampled.

### (b) Dynamic resolution compression

The dynamic resolution compression means that different resolutions are allocated to image frames of different importance based on importance of each image frame obtained through non-uniform thinning, and compression is performed to obtain the highlight playback video. For an image frame of high importance, a high resolution may be retained; and for an image frame of low importance, a resolution of the image frame may be reduced. For example, the image frame of high importance may include a key frame, an image indicating a floor change (which may also be referred to as a "floor change frame"), an image indicating vehicle steering (which may also be referred to as a "steering frame"), or the like. A resolution of the image frame indicating a floor change and a resolution of the image frame indicating vehicle steering are improved, so that when browsing the wonderful playback video, a user can more intuitively view when and where steering or a floor change occurs, or the like.

In this embodiment, when the vehicle 100 is currently located at the parking space or the like, the controller 150 may transmit, to the terminal device 200 through the communication module 160, some or all of the data obtained by the controller 150 through processing. For example, the data transmitted by the vehicle 100 to the terminal device 200 may be referred to as parking aggregation. The parking aggregation includes parking data of the vehicle in the indoor parking lot. The parking data may include one or more of a traveling trajectory of the vehicle in the indoor parking lot, location coordinates of the vehicle in the indoor parking lot, a floor and/or an area of a parking space of the vehicle in the indoor parking lot, a floor through which the vehicle passes when traveling in the indoor parking lot, a key frame, and a highlight playback video when the vehicle travels in the indoor parking lot. When the parking aggregation includes a plurality of types of data, transmission priorities of different data are different. For example, priorities of the key frame and the traveling trajectory are the same, but are greater than a priority of the selected playback video. In this way, when network quality of a communication network between the vehicle 100 and the terminal device 200 is poor, some data with a high transmission priority may be preferentially transmitted.

The communication module 160 is mainly configured to enable the vehicle 100 to directly or indirectly communicate with the terminal device 200, to transmit, to the terminal device 200, the parking aggregation obtained through processing by the controller 150.

In this embodiment, when the vehicle 100 communicates with the terminal device 200 to transmit the parking aggregation through the communication module 160, in the system architecture shown in (A) in FIG. 1, when the network quality of the communication network between the vehicle 100 and the terminal device 200 is good, for example, when the vehicle 100 and the terminal device 200 are in a HarmonyOS ecosystem, the vehicle 100 may transmit all data included in the parking aggregation to the terminal device 200 at a high speed; or when the network quality of the communication network between the vehicle 100 and the terminal device 200 is poor, for example, when the vehicle 100 and the terminal device 200 are connected through a data cable, the vehicle 100 may select data with a high transmission priority in the parking aggregation and transmit the data to the terminal device 200.

In the system architecture shown in (B) in FIG. 1, when transmitting the parking aggregation to the terminal device 200, the vehicle 100 may also transmit the parking aggregation based on the network quality of the communication network between the vehicle 100 and the terminal device 200. In this case, the communication network between the vehicle 100 and the terminal device 200 may be a network formed by the vehicle 100, the terminal device 200, and the server 300. The vehicle 100 may sequentially transmit each piece of data to the server 300 based on a transmission priority of each piece of data in the parking aggregation. Then, the server 300 may forward each piece of data to the terminal device 200 based on the transmission priority of each piece of data in the parking aggregation.

In the system architecture shown in (C) in FIG. 1, when transmitting the parking aggregation to the terminal device 200, the vehicle 100 may also transmit the parking aggregation based on the network quality of the communication network between the vehicle 100 and the terminal device 200. In this case, the communication network between the vehicle 100 and the terminal device 200 may be a network formed by the vehicle 100 and the terminal device 200, or a network formed by the vehicle 100, the terminal device 200, and the server 300. The vehicle 100 may sequentially transmit each piece of data to the terminal device 200 based on a transmission priority of each piece of data in the parking aggregation. When the vehicle 100 does not transmit all data in the parking aggregation to the terminal device 200, and the terminal device 200 disconnects from a network connection to the vehicle 100, the vehicle 100 may sequentially transmit the remaining pieces of data in the parking aggregation to the server 300 based on transmission priorities of the remaining pieces of data in the parking aggregation. Then, the server 300 may forward the remaining pieces of data to the terminal device 200 based on the transmission priorities of the remaining pieces of data in the parking aggregation.

In addition, the vehicle 100 may further include a speaker and/or a display (not shown in the figure). In this way, when the vehicle 100 is currently located at the parking space, the vehicle 100 may play location information of the parking space through the speaker, and/or display the location information of the parking space through the display. In this way, a vehicle owner is reminded in the vehicle 100.

It should be understood that the foregoing is mainly described by using an example in which the user parks the vehicle 100 in the indoor parking lot. When the user parks the vehicle 100 in an outdoor parking lot, the user may also refer to the foregoing content to obtain parking aggregation of the vehicle 100 when the vehicle 100 is parked in the outdoor parking lot. Details are not described herein again. In addition, when the vehicle 100 is in a parking space in the outdoor parking lot, the vehicle 100 may also transmit, to the terminal device 200, the parking aggregation of the vehicle 100 when the vehicle 100 is parked in the outdoor parking lot.

It can be understood that the structure shown in FIG.2 in this embodiment does not constitute a specific limitation on the vehicle 100. In some other embodiments, the vehicle 100 may include more or fewer components than those shown in the figure, or a combination of a part of the components, or splits from a part of the components, or an arrangement of different components. The components shown in the figure may be implemented by hardware, software, or a combination of software and hardware.

The foregoing describes the vehicle 100 in the vehicle location prompt system provided in this embodiment of this application. The following describes the terminal device 200 in the vehicle location prompt system. The terminal device 200 may be a mobile phone, a tablet computer, a notebook computer, an augmented reality (augmented reality, AR) device, a virtual reality (virtual reality, VR) device, an artificial intelligence (artificial intelligence, AI) device, a wearable device, or the like. A specific type of the terminal device 200 is not limited in embodiments of this application.

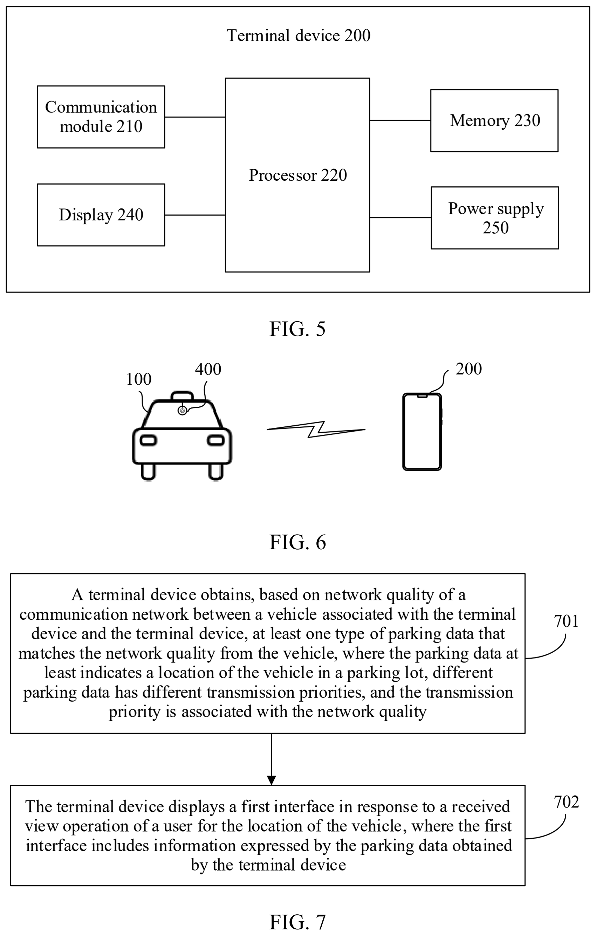

For example, FIG. 5 is a diagram of a hardware structure of a terminal device according to this embodiment of this application. As shown in FIG. 5, a terminal device 200 may include a communication module 210, a processor 220, a memory 230, a display 240, and a power supply 250.

The communication module 210 is mainly configured to enable the terminal device 200 to directly or indirectly communicate with the vehicle 100, so that the terminal device 200 can obtain parking aggregation transmitted by the vehicle 100. The terminal device 200 may also receive the parking aggregation based on network quality of a communication network between the terminal device 200 and the vehicle 100. In other words, when the network quality of the communication network between the terminal device 200 and the vehicle 100 is good, the terminal device 200 can quickly obtain all data in the parking aggregation. When the network quality of the communication network between the terminal device 200 and the vehicle 100 is poor, the terminal device 200 can obtain a part of data in the parking aggregation, or obtain a part of data in the parking aggregation first, and then slowly obtain remaining data in the parking aggregation.

The processor 220 is a computing core and a control core of the terminal device 200. The processor 220 may include one or more processing units. For example, the processor 220 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In this embodiment, the processor 220 may process the data in the parking aggregation received by the terminal device 200. For example, the processor 220 may map a traveling trajectory in the parking aggregation and location coordinates of the vehicle 100 in the indoor parking lot to a map on the terminal device 200. The processor 220 may further retrieve some or all facilities (for example, an elevator and an escalator) in a building in which the vehicle 100 is located, and control the facilities to be displayed on the map. In addition, the processor 220 may also associate the traveling trajectory in the parking aggregation with a floor on which the vehicle 100 is at each moment, calculate a traveling distance of the vehicle 100 on each floor, and draw a floor stepped diagram (for example, the diagram shown in FIG. 3) based on the floor and the traveling distance. The processor 220 may also associate the traveling trajectory in the parking aggregation with the floor on which the vehicle 100 is at each moment, distinguish trajectories of the vehicle 100 on each floor in the indoor parking lot by using different colors in the traveling trajectory, and distinguish the trajectories by using corresponding colors in the floor stepped diagram, and the like. For example, a color of a trajectory on a floor is the same as a color of a line of the floor in the floor stepped diagram.

The memory 230 may store a program, and the program may be run by the processor 220, so that the processor 220 performs the method performed by the terminal device 200 provided in this embodiment of this application. The memory 230 may further store data. The processor 220 may read data stored in the memory 230. The memory 230 and the processor 220 may be separately disposed. Optionally, the memory 230 may alternatively be integrated into the processor 220.

The display 240 is configured to display an image, a video, and the like. In this embodiment, when the user views a location of the vehicle, the display 240 may present, to the user, the parking aggregation received by the terminal device 200, for example, display the traveling trajectory of the vehicle in the indoor parking lot, the location coordinates of the vehicle in the indoor parking lot, location information of a parking space in which the vehicle is located, a floor height change diagram (namely, a floor stepped diagram) of the vehicle when the vehicle travels in the indoor parking lot, a parking space frame, a floor frame, an area frame, and a highlight playback video. In this way, the user can intuitively learn of information such as a location of the vehicle of the user through the terminal device 200. In some embodiments, when network quality of a communication network between the terminal device 200 and the vehicle 100 is poor or gradually improves, if the terminal device 200 first obtains a part of data in the parking aggregation, and then slowly obtains remaining data in the parking aggregation. The data in the parking aggregation obtained by the terminal device 200 from the vehicle 100 is gradually increased. Therefore, information displayed on the display 240 is also gradually increased.

The power supply 250 is mainly configured to provide electric energy for the terminal device 200.

It may be understood that the structure shown in FIG. 5 in this embodiment does not constitute a specific limitation on the terminal device 200. In some other embodiments, the terminal device 200 may include more or fewer components than those shown in the figure, or a combination of a part of the components, or splits from a part of the components, or an arrangement of different components. The components shown in the figure may be implemented by hardware, software, or a combination of software and hardware.

For example, FIG. 6 is a diagram of a structure of another vehicle location prompt system according to an embodiment of this application. As shown in FIG. 6, the vehicle location prompt system may also include the vehicle 100 and the terminal device 200. However, in the system, the vehicle 100 is configured with a driving recorder 400. The driving recorder 400 and the terminal device 200 may establish a communication connection through a wireless network or the like. In this case, the driving recorder 400 may transmit, to the terminal device 200, an image or a video that is collected by the driving recorder 400 and in which the vehicle 100 travels in an indoor parking lot. The terminal device 200 may compute the traveling trajectory of the vehicle 100 in the indoor parking lot and a corresponding floor based on data collected by hardware (for example, a gyroscope) configured on the terminal device 200, and process an image collected by the driving recorder to obtain a key frame, and/or analyze a floor or an area in which the vehicle 100 is located. In other words, in the system architecture, operations performed by the controller 150 in the vehicle 100 are all transferred to the terminal device 200 for execution. In this system architecture, in a traveling process of the vehicle 100, the terminal device 200 needs to be located in the vehicle 100, to collect traveling data of the vehicle 100, to obtain a traveling trajectory of the vehicle 100, and the like. In this system architecture, the vehicle 100 and the terminal device 200 may establish a communication connection, or may not establish a communication connection. In addition, in this system architecture, a camera on the driving recorder 400 may be understood as a camera in the vehicle 100.

In addition, in the system architecture shown in FIG. 6, a part of data (for example, the traveling trajectory) may be processed by the vehicle 100 and then transmitted to the terminal device 200. Another part of the data (for example, selecting a key frame and making a highlight playback video) is processed by the terminal device 200. In this processing manner, the vehicle 100 and the terminal device 200 may also establish a communication connection through a network, so that the vehicle 100 transmits the data obtained through processing to the terminal device 200. The data processed by the vehicle 100 and the terminal device 200 may be determined based on an actual situation. This is not limited herein.

The foregoing describes the vehicle location prompt system, the vehicle, and the terminal device provided in embodiments of this application. The following describes, based on the foregoing content, the vehicle location prompt method provided in embodiments of this application. For some or all of the following content, refer to the foregoing related descriptions.

For example, FIG. 7 is a schematic flowchart of a vehicle location prompt method according to an embodiment of this application. As shown in FIG. 7, the vehicle location prompt method may include the following steps.

S701: The terminal device 200 obtains, from the vehicle 100 based on network quality of a communication network between the terminal device 200 and the vehicle 100 associated with the terminal device 200, at least one type of parking data that matches the network quality. The parking data at least indicates a location of the vehicle 100 in a parking lot. Different parking data has different transmission priorities, and the transmission priority is associated with the network quality.

In this embodiment, when the vehicle 100 associated with the terminal device 200 is parked in a parking space (for example, a gear of the vehicle 100 is a parking gear), or a distance between the terminal device 200 and the vehicle 100 is within a preset distance (for example, 1 meter), or a user starts an application (application, APP) used to view a location of the vehicle 100 on the terminal device 200, or the user triggers viewing of the location of the vehicle 100 on the APP used to view the location of the vehicle 100 on the terminal device 200, the terminal device 200 may obtain, from the vehicle 100 based on the network quality of the communication network between the terminal device 200 and the vehicle 100, the at least one type of parking data that matches the network quality. The parking data may at least indicate the location of the vehicle 100 in the parking lot, different parking data has different transmission priorities, and the transmission priority is associated with the network quality of the communication network between the terminal device 200 and the vehicle 100. In this way, when the network quality of the communication network between the terminal device 200 and the vehicle 100 is different, the terminal device 200 can obtain different parking data, and the obtained parking data is closely related to the network quality. Therefore, subsequently, the user can view the location of the vehicle 100 in a plurality of different network environments through the terminal device 200. For example, the vehicle 100 associated with the terminal device 200 may be the vehicle 100 bound to the terminal device 200, for example, bound through Bluetooth or bound through an APP.

S702: The terminal device 200 displays a first interface in response to a received view operation of the user for the location of the vehicle 100, where the first interface includes information expressed by the parking data obtained by the terminal device 200.

In this embodiment, the user may perform the view operation on the location of the vehicle 100 on the terminal device 200. Then, the terminal device 200 may obtain the operation. For example, the view operation may be an operation of viewing, by the user, the location of the vehicle 100 in an APP on the terminal device 200 or in a mini program in the APP.

After obtaining the view operation, the terminal device 200 may display the first interface on a display of the terminal device 200. The first interface may include the information expressed by the obtained parking data. In other words, the terminal device 200 displays, on a display interface of the terminal device 200, information expressed by corresponding parking data obtained by the terminal device 200.

In this way, after the user parks the vehicle in the parking lot, the user can view, on the terminal device used by the user, the parking data of the vehicle in the parking lot. This enables the user to quickly learn of a location of the vehicle in the parking lot, and then quickly find the vehicle.

In some embodiment, when the network quality of the communication network between the terminal device 200 and the vehicle 100 meets a first condition, the parking data obtained by the terminal device 200 may include a traveling trajectory of the vehicle 100 in the parking lot, location coordinates of the vehicle 100 in the parking lot, a floor and/or an area of the vehicle 100 in the parking lot, a floor through which the vehicle 100 passes when traveling in the parking lot, a key frame, and a highlight playback video when the vehicle 100 travels in the parking lot. For example, the key frame may include one or more of a parking space frame, a floor frame, and an area frame. The parking space frame is an image that is of surroundings of the vehicle 100 and that includes an identifier that is capable of indicating the location of the vehicle 100, the floor frame is an image including an identifier of a floor on which the vehicle 100 is, and the area frame is an image including an identifier of an area in which the vehicle 100 is located. For example, for each piece of data included in the parking data, refer to the foregoing descriptions of the parking data. Details are not described herein again.

When the network quality of the communication network between the terminal device 200 and the vehicle 100 meets a second condition, the parking data obtained by the terminal device 200 may include one or more of the following: a traveling trajectory of the vehicle 100 in the parking lot, location coordinates of the vehicle 100 in the parking lot, a floor and/or an area of the vehicle 100 in the parking lot, a floor through which the vehicle 100 passes when traveling in the parking lot, or a key frame.

The network quality indicated by the first condition is higher than the network quality indicated by the second condition. In other words, when the network quality between the terminal device 200 and the vehicle 100 is good, the terminal device 200 can obtain all parking data. When the network quality between the terminal device 200 and the vehicle 100 is poor, the terminal device 200 can obtain a part of parking data. In this way, when the network quality of the communication network between the terminal device and the vehicle varies, the user may view different parking data on the terminal device, so that the user can learn of location information of the vehicle in different network quality, and the user can quickly find the vehicle in different network quality.

For example, the first condition and the second condition described above may be related to time of transmitting information. For example, the first condition is met when the time of transmitting information is less than preset time, and the second condition is met when the time of transmitting information is greater than or equal to the preset time. In addition, the first condition and the second condition may also be related to a quality of a network signal on the terminal device 200. For example, the first condition is met when a quantity of bars or bar icons in a signal bar or signal strength indicator indicating network signal strength on the terminal device 200 exceeds a preset quantity, and the second condition is met when the quantity of bars or bar icons in the signal bar or signal strength indicator indicating the network signal strength on the terminal device 200 is less than the preset quantity. Alternatively, the first condition is met when the network signal strength of the terminal device 200 is greater than a preset threshold, and the second condition is met when the network signal strength of the terminal device 200 is less than the preset threshold. In addition, the first condition and the second condition may also be related to a distance between the vehicle 100 and the terminal device 200. For example, the first condition is met when the distance between the terminal device 200 and the vehicle 100 is less than a preset distance, and the second condition is met when the distance between the terminal device 200 and the vehicle 100 is greater than or equal to the preset distance.

Further, the second condition may further include a plurality of sub-conditions. For example, the second condition may include a first sub-condition, a second sub-condition, a third sub-condition, a fourth sub-condition, a fifth sub-condition, or the like. For ease of description, the following uses an example in which the second condition includes the first sub-condition, the second sub-condition, the third sub-condition, and the fourth sub-condition, network quality indicated by the second sub-condition is lower than network quality indicated by the first sub-condition, network quality indicated by the third sub-condition is lower than the network quality indicated by the second sub-condition, and network quality indicated by the fourth sub-condition is lower than the network quality indicated by the third sub-condition, to describe parking data obtained by the terminal device 200 under different sub-conditions.

When the network quality of the communication network between the terminal device 200 and the vehicle 100 meets the first sub-condition in the second condition, the parking data obtained by the terminal device 200 may include the traveling trajectory of the vehicle 100 in the parking lot, the location coordinates of the vehicle 100 in the parking lot, the floor and/or the area of the vehicle 100 in the parking lot, the floor through which the vehicle 100 passes when traveling in the parking lot, and a key frame.

When the network quality of the communication network between the terminal device 200 and the vehicle 100 meets the second sub-condition in the second condition, the parking data obtained by the terminal device 200 may include the traveling trajectory of the vehicle 100 in the parking lot, the location coordinates of the vehicle 100 in the parking lot, and the floor and/or the area of the vehicle 100 in the parking lot, and a parking space frame.

When the network quality of the communication network between the terminal device 200 and the vehicle 100 meets the third sub-condition in the second condition, the parking data obtained by the terminal device 200 may include the traveling trajectory of the vehicle 100 in the parking lot, the location coordinates of the vehicle 100 in the parking lot, and the floor and/or the area of the vehicle 100 in the parking lot.

When the network quality of the communication network between the terminal device 200 and the vehicle 100 meets the fourth sub-condition in the second condition, the parking data obtained by the terminal device 200 may include the floor and/or the area of the vehicle 100 in the parking lot and/or the location coordinates of the vehicle 100 in the parking lot.

In this way, when the network quality of the communication network between the terminal device 200 and the vehicle 100 is good, the terminal device 200 can obtain more parking data. When the network quality is poor, the terminal device 200 can obtain less parking data. In this way, the user can learn of location information of the vehicle in different network quality, and then the user can quickly find the vehicle in different network quality. In addition, it should be noted that, when the network quality meets the second sub-condition, the third sub-condition, or the fourth sub-condition, the parking data obtained by the terminal device 200 may be selected based on an actual situation. This is not limited herein.

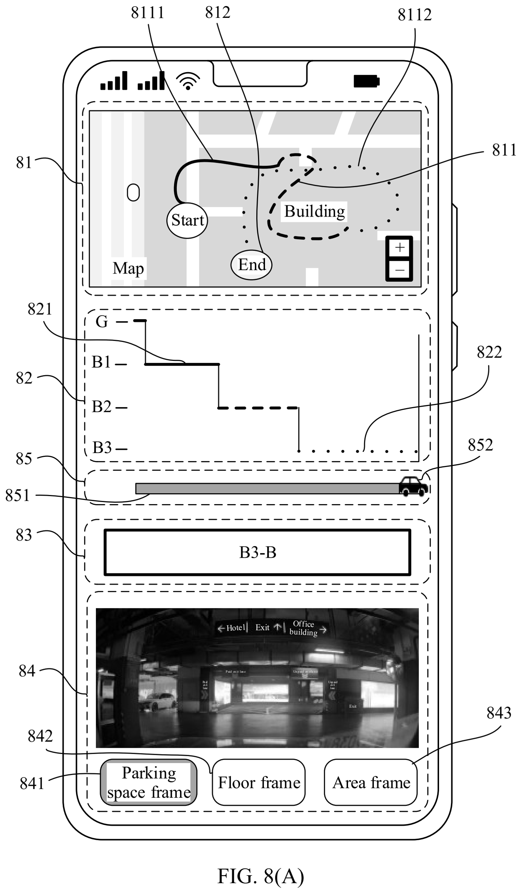

In addition, in this embodiment, when the network quality of the communication network between the terminal device 200 and the vehicle 100 meets the first condition, as shown in FIG. 8(A) to FIG. 8(C), the first interface displayed on the terminal device 200 may include a first area 81, a second area 82, a third area 83, a fourth area 84, and a fifth area 85.

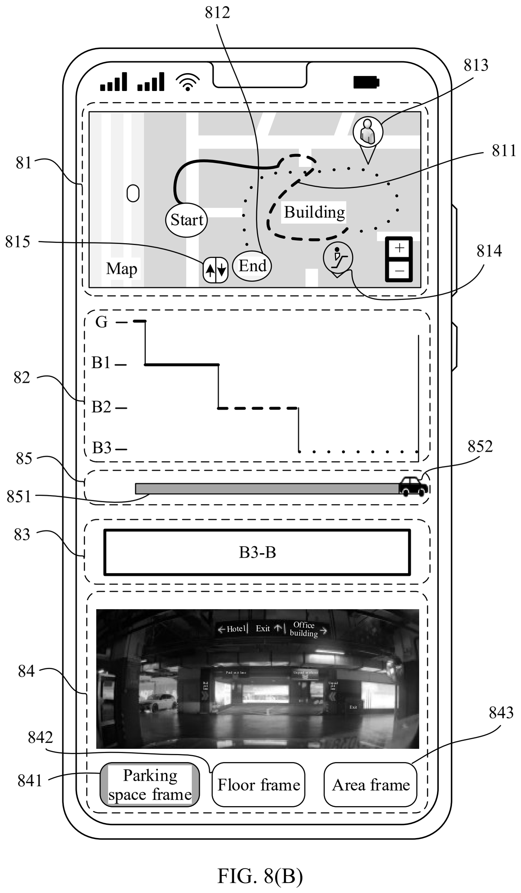

As shown in FIG. 8(A), a map may be displayed in the first area 81, and a traveling trajectory 811 of the vehicle in a parking lot and location coordinates 812 of the vehicle in the parking lot are marked on the map. In some embodiments, the map displayed in the first area 81 may also be marked with one or more of the following: at least a part of facilities in a building to which the parking lot belongs, or a first traveling route from a location of the user to a location of the vehicle, or at least a part of facilities on the first traveling route, or the location of the user, or a second traveling route from the location of the user to a target facility in the building, where the target facility is used for leaving/entering the parking lot, so that the user can quickly leave/enter the parking lot. For example, as shown in FIG. 8(B), a location 814 of the user, an escalator 814, and an elevator 815 may be marked on the map.

Still refer to FIG. 8(A). A floor stepped diagram may be displayed in the second area 82. The floor stepped diagram mainly indicates a traveling distance of the vehicle on a floor in the parking lot and a floor on which the vehicle is. In some embodiments, when the first interface includes the first area 81 and the second area 82, traveling trajectory identifiers of traveling trajectories of the vehicle on different floors in the parking lot in the first area 81 may be different, floor trajectory identifiers of different floors included in the floor stepped diagram in the second area 82 may also be different, and the traveling trajectory identifier and the floor trajectory identifier that correspond to a same floor are the same. For example, still refer to FIG. 8(A). A traveling trajectory identifier 8111 of the vehicle traveling on a B1 floor is different from a traveling trajectory identifier 8112 of the vehicle traveling on a B3 floor. In addition, a floor trajectory identifier 821 of the vehicle traveling on the B1 floor is different from a traveling trajectory identifier 822 of the vehicle traveling on the B3 floor. Moreover, the traveling trajectory identifier 8111 is the same as the floor trajectory identifier 821, and the traveling trajectory identifier 8112 is the same as the floor trajectory identifier 822. In this way, the user can intuitively learn of traveling statuses of the user on different floors and traveling trajectories of the user on different floors, thereby improving user experience.

Still refer to FIG. 8(A) to FIG. 8(C). A floor and/or an area of the vehicle in the parking lot may be displayed in the third area 83, for example, B3-B (namely, an area B on the B3 floor).

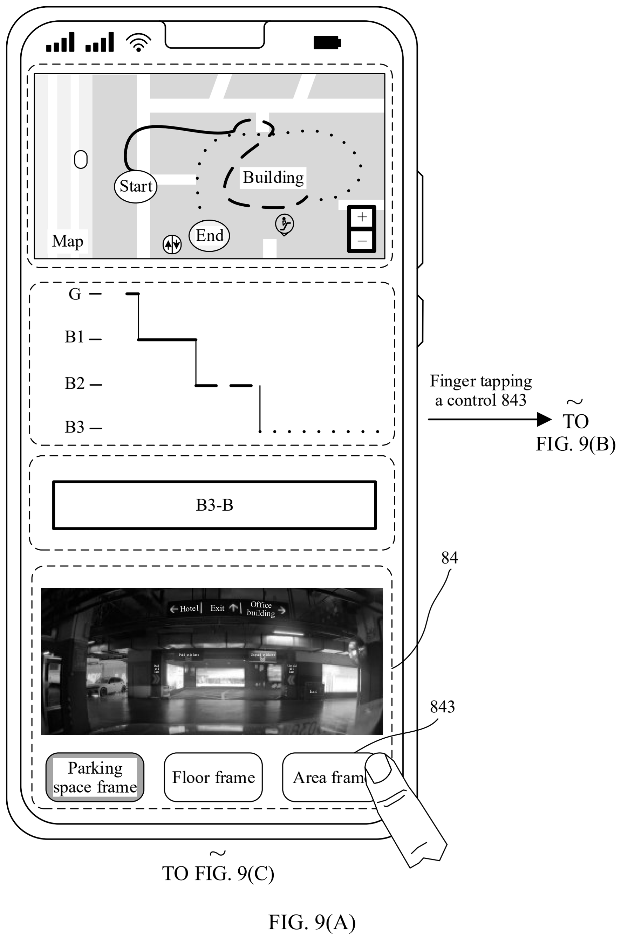

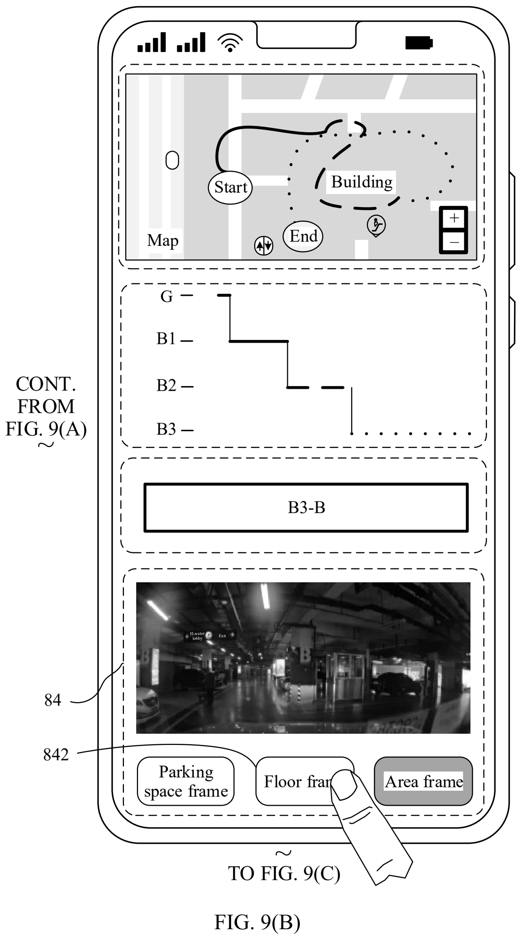

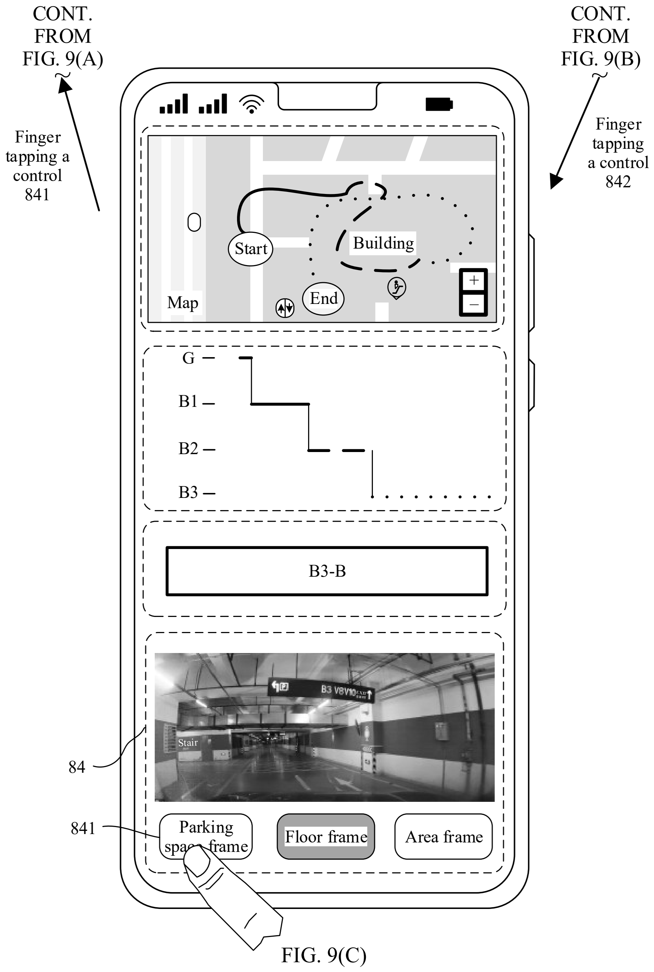

Refer to FIG. 8(A) or FIG. 8(B). One frame of image included in a key frame is displayed in the fourth area 84. When the key frame includes a plurality of frames of images, an image switching control used to switch the images included in the key frame is displayed. For example, the fourth area 84 may display controls 841, 842, and 843. The control 841 is used to view a parking space frame, the control 842 is used to view a floor frame, and the control 843 is used to view an area frame. In addition, when the user triggers (for example, taps) a control in the fourth area 84, an image corresponding to the control triggered by the user may be displayed in the fourth area 84. For example, as shown in FIG. 9(A) to FIG. 9(C), in FIG. 9(A), a parking space frame is displayed in the fourth area 84. After the user may tap the control 843, the terminal device 200 may display an interface shown in FIG. 9(B). In FIG. 9(B), an area frame is displayed in the fourth area 84. In FIG. 9(B), after the user may tap the control 842, the terminal device 200 may display an interface shown in FIG. 9(C). In FIG. 9(C), a floor frame is displayed in the fourth area 84. In FIG. 9(C), after the user may tap the control 841, the terminal device 200 may display an interface shown in FIG. 9(A). In some embodiments, the key frame may include at least one of the floor frame and the area frame, and include the parking space frame. When the key frame includes one of the floor frame and the area frame, and includes the parking space frame, the control 841 and one of the controls 842 and 843 may be displayed in the fourth area 84.

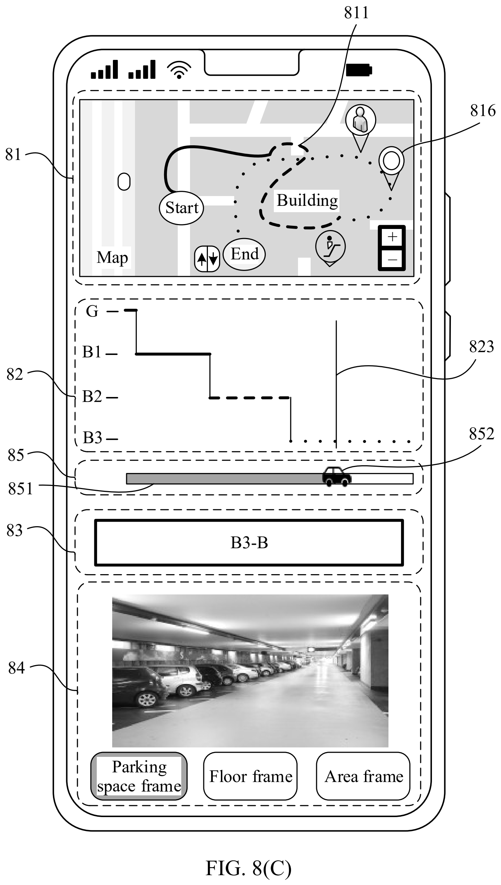

Still refer to FIG. 8(A) to FIG. 8(C). A timeline 851 of a highlight playback video is displayed in the fifth area 85, and a time adjustment control 852 is configured on the timeline 851. The time adjustment control 852 is mainly used to adjust time of the highlight playback video. In this embodiment, when the user views the highlight playback video, the highlight playback video may be displayed in the fourth area 84. In addition, the user may move the time adjustment control 852 to adjust the time of the highlight playback video. For example, as shown in FIG. 8(C), when the user moves the time adjustment control 852, the terminal device 200 may mark, in response to a movement operation of the user for the time adjustment control 852, on the traveling trajectory 811 displayed in the first area 81, a location 816 of the vehicle at a first moment corresponding to a location of the time adjustment control 852, and display, in the fourth area 84, an image of the vehicle traveling in the parking lot at the first moment. An image in the highlight playback video may be displayed in a window for displaying the parking space frame, may be displayed in a window for displaying the floor frame, or may be displayed in a window for displaying the area frame. This is not limited herein. In addition, when the user moves the time adjustment control 852, as shown in FIG. 8(C), the terminal device 200 may further display an indicator 823 in the floor stepped diagram displayed in the second area 82. The indicator 823 may indicate a location of the vehicle in the floor stepped diagram at the first moment corresponding to the location of the time adjustment control 852. In this way, when viewing the highlight playback video, the user can observe a location and/or a floor of the vehicle at a moment when the highlight playback video is being played, thereby improving user experience.

In this embodiment, when the network quality of the communication network between the terminal device 200 and the vehicle 100 meets the second condition, the first interface displayed on the terminal device 200 may include at least one of the first area 81, the second area 82, the third area 83, and the fourth area 84 shown in FIG. 8(A) to FIG. 8(C).

To help understand the content of the method, the following uses an example for description, where a quantity of bars in a signal strength indicator on the terminal device 200 that indicates network signal strength indicates the network quality of the communication network between the terminal device 200 and the vehicle 100, and information is displayed on the terminal device 200 in different network quality.

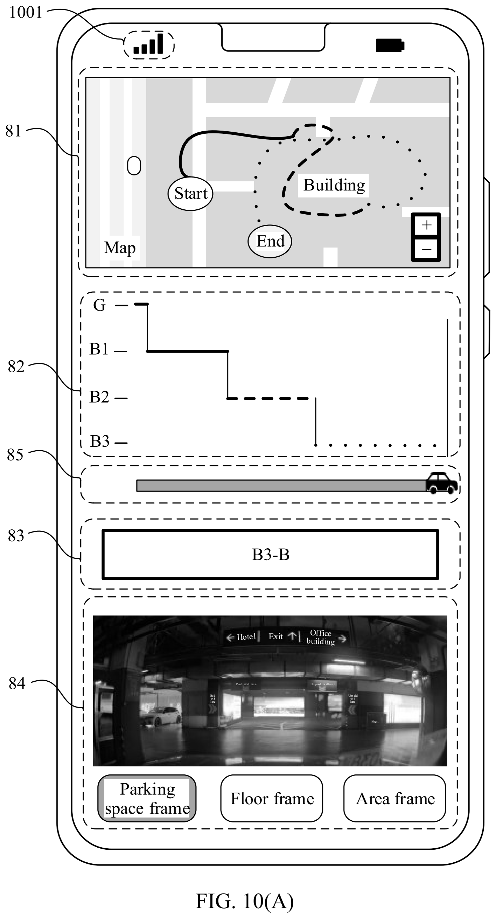

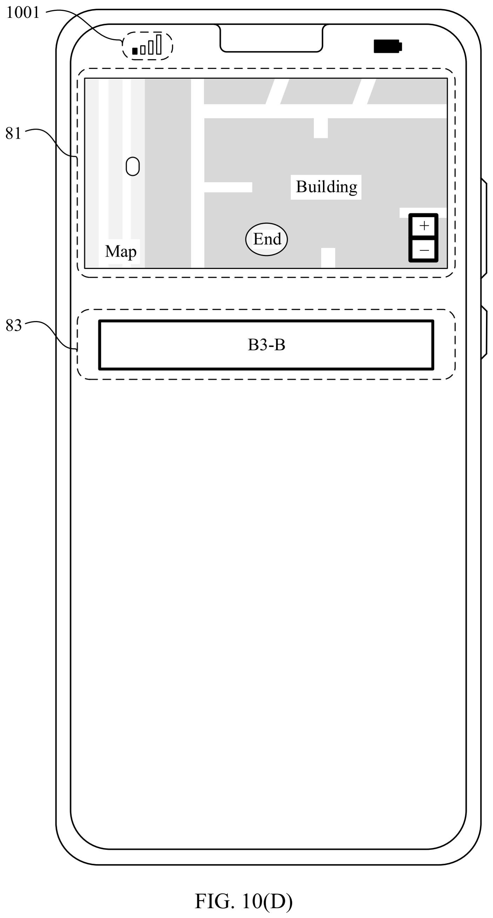

For example, as shown in FIG. 10(A), when the quantity of bars in the signal strength indicator in an area 1001 is 4, the information displayed on the terminal device 200 is content displayed in the first area 81, the second area 82, the third area 83, the fourth area 84, and the fifth area 85 described in FIG. 8(A) to FIG. 8(C).

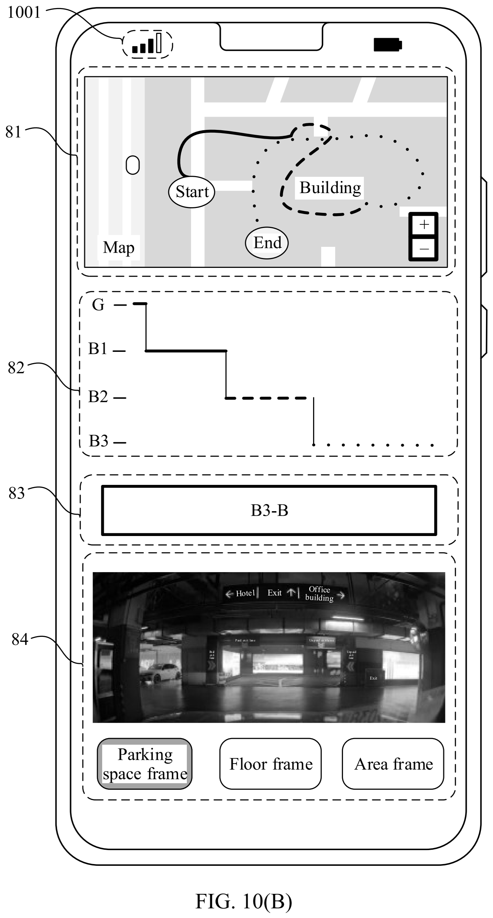

As shown in FIG. 10(B), when the quantity of bars in the signal strength indicator in the area 1001 is 3, the information displayed on the terminal device 200 is content displayed in the first area 81, the second area 82, the third area 83, and the fourth area 84 described in FIG. 8(A) to FIG. 8(C).

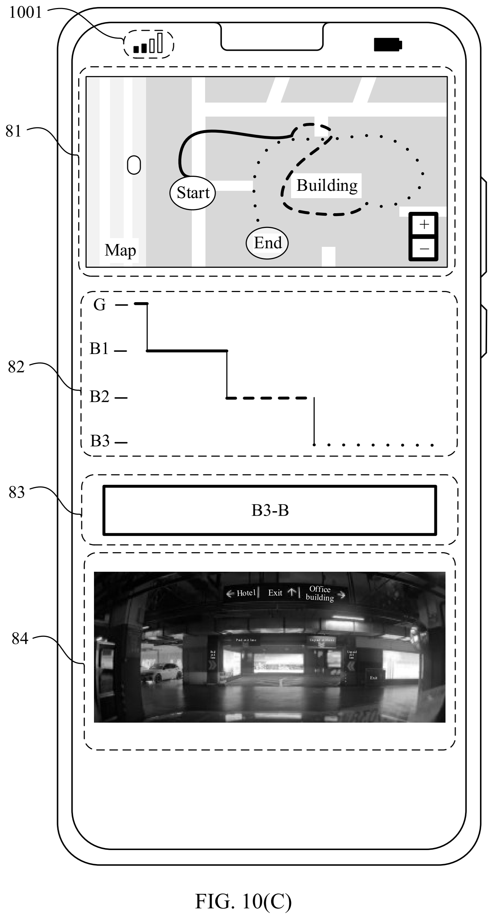

As shown in FIG. 10(C), when the quantity of bars in the signal strength indicator in the area 1001 is 2, the information displayed on the terminal device 200 is content displayed in the first area 81, the second area 82, and the third area 83 described in FIG. 8(A) to FIG. 8(C), and only a parking space frame is displayed in the fourth area 84.

As shown in FIG. 9(D), when the quantity of bars in the signal strength indicator in an area 91 is 1, the information displayed on the terminal device 200 is the map displayed in the first area 81 described in FIG. 8(A) to FIG. 8(C), and only the location coordinates of the vehicle and content displayed in the third area 83 are marked on the map.

It should be understood that FIG. 9(A) to FIG. 9(C) are merely an example for description. Specific content displayed on the terminal device 200 may be adjusted based on an actual situation. This is not limited herein.

Based on the method in the foregoing embodiment, an embodiment of this application provides a computer-readable storage medium. The computer-readable storage medium stores a computer program. When the computer program is run on a processor, the processor is caused to perform the method in the foregoing embodiment.

Based on the method in the foregoing embodiment, an embodiment of this application provides a computer program product. When the computer program product is run on a processor, the processor is caused to perform the method in the foregoing embodiment.

It should be understood that steps in the foregoing method embodiments may be implemented by using a logic circuit in a form of hardware or instructions in a form of software in the processor.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that digital numbers used in embodiments of this application are merely for distinguishing between embodiments for ease of description, and are not intended to limit the scope of embodiments of this application.

## Claims

1. A vehicle location prompt method, applied to a terminal device and comprising:
obtaining, based on network quality of a communication network between a vehicle associated with the terminal device and the terminal device, at least one type of parking data that matches the network quality from the vehicle, wherein the parking data at least indicates a location of the vehicle in a parking lot, different parking data has different transmission priorities, and the transmission priority is associated with the network quality; and
displaying a first interface in response to a received view operation of a user for the location of the vehicle, wherein the first interface comprises information expressed by the parking data obtained by the terminal device.

2. The method according to claim 1, wherein
when the network quality meets a first condition, the parking data obtained by the terminal device comprises a traveling trajectory of the vehicle in the parking lot, location coordinates of the vehicle in the parking lot, a floor and/or an area of the vehicle in the parking lot, a floor through which the vehicle passes when traveling in the parking lot, the key frame, and a highlight playback video when the vehicle travels in the parking lot; and
when the network quality meets a second condition, the parking data obtained by the terminal device comprises one or more of the following: a traveling trajectory of the vehicle in the parking lot, location coordinates of the vehicle in the parking lot, a floor and/or an area of the vehicle in the parking lot, a floor through which the vehicle passes when traveling in the parking lot, or a key frame, wherein the network quality indicated by the first condition is higher than the network quality indicated by the second condition, wherein
the key frame comprises one or more of a parking space frame, a floor frame, and an area frame, the parking space frame is an image that is of surroundings of the vehicle and that comprises an identifier that is capable of indicating the location of the vehicle, the floor frame is an image comprising an identifier of a floor on which the vehicle is, and the area frame is an image comprising an identifier of an area in which the vehicle is.

3. The method according to claim 2, wherein
when the network quality meets a first sub-condition in the second condition, the parking data obtained by the terminal device comprises the traveling trajectory of the vehicle in the parking lot, the location coordinates of the vehicle in the parking lot, the floor and/or the area of the vehicle in the parking lot, the floor through which the vehicle passes when traveling in the parking lot, and the key frame.

4. The method according to claim 3, wherein
when the network quality meets a second sub-condition in the second condition, the parking data obtained by the terminal device comprises the traveling trajectory of the vehicle in the parking lot, the location coordinates of the vehicle in the parking lot, the floor and/or the area of the vehicle in the parking lot, and the parking space frame, wherein network quality indicated by the second sub-condition is lower than network quality indicated by the first sub-condition;
when the network quality meets a third sub-condition in the second condition, the parking data obtained by the terminal device comprises the traveling trajectory of the vehicle in the parking lot, the location coordinates of the vehicle in the parking lot, and the floor and/or the area of the vehicle in the parking lot, wherein network quality indicated by the third sub-condition is lower than the network quality indicated by the second sub-condition; and
when the network quality meets a fourth sub-condition in the second condition, the parking data obtained by the terminal device comprises the floor and/or the area of the vehicle in the parking lot, and/or the location coordinates of the vehicle in the parking lot, wherein network quality indicated by the fourth sub-condition is lower than the network quality indicated by the third sub-condition.

5. The method according to any one of claims 2 to 4, wherein when the network quality meets the first condition, the first interface comprises:
a first area in which a map is displayed, wherein the traveling trajectory of the vehicle in the parking lot and the location coordinates of the vehicle in the parking lot are marked on the map;
a second area in which a floor stepped diagram is displayed, wherein the floor stepped diagram indicates a traveling distance of the vehicle on a floor in the parking lot and a floor on which the vehicle is;
a third area in which the floor and/or the area of the vehicle in the parking lot are/is displayed;
a fourth area in which a frame of image comprised in the key frame is displayed and in which an image switching control used to switch an image comprised in the key frame is displayed when the key frame comprises a plurality of frames of images; and
a fifth area in which a timeline of the highlight playback video is displayed, wherein a time adjustment control is configured on the timeline, the time adjustment control is used to adjust time of the highlight playback video, and the highlight playback video is displayed in the fourth area, wherein
when the network quality meets the second condition, the first interface comprises at least one of the first area, the second area, the third area, and the fourth area.

6. The method according to claim 5, wherein when the first interface comprises the fourth area, and the key frame comprises a plurality of frames of images, the image switching control comprises a first control and/or a second control, and a third control, wherein the first control is used to view the area frame, the second control is used to view the floor frame, and the third control is used to view the parking space frame.

7. The method according to claim 5 or 6, wherein when the first interface comprises the fifth area, the method further comprises:
in response to a movement operation of the user for the time adjustment control, marking, on the traveling trajectory displayed in the first area, a location of the vehicle at a first moment corresponding to a location of the time adjustment control, and displaying, in the fourth area, an image of the vehicle traveling in the parking lot at the first moment; and/or
displaying an indicator in the floor stepped diagram displayed in the second area, wherein the indicator indicates a location of the vehicle in the floor stepped diagram at the first moment.

8. The method according to any one of claims 5 to 7, wherein when the first interface comprises the first area and the second area, traveling trajectory identifiers of traveling trajectories of the vehicle on different floors in the parking lot in the first area are different, floor trajectory identifiers of different floors comprised in the floor stepped diagram in the second area are different, and a traveling trajectory identifier and a floor trajectory identifier that correspond to a same floor are the same.

9. The method according to any one of claims 5 to 8, wherein when the first interface comprises the first area, one or more of the following are further marked on the map:
at least a part of facilities in a building to which the parking lot belongs, or a first traveling route from a location of the user to the location of the vehicle, or at least a part of facilities on the first traveling route, or the location of the user, or a second traveling route from the location of the user to a target facility in the building, wherein the target facility is used for leaving/entering the parking lot.

10. The method according to any one of claims 2 to 9, wherein, in the highlight playback video, a resolution of a first image frame is greater than a resolution of a second image frame;
the first image frame comprises one or more of a floor change frame, a steering frame, or the key frame, the floor change frame is an image that is capable of indicating a floor change, and the steering frame is an image that is capable of indicating vehicle steering; and
the second image frame is a frame other than the first image frame in the highlight playback video.

11. The method according to any one of claims 2 to 10, wherein the highlight playback video is obtained by sampling a complete video of the vehicle traveling in the parking lot, and in the complete video, a sampling frequency of a third image frame is greater than a sampling frequency of a fourth image frame, wherein
the third image frame is a frame that comprises a floor identifier/an area identifier and in which a confidence level of the floor identifier/area identifier is greater than a preset confidence level; and
the fourth image frame is a frame that does not comprise the floor identifier/area identifier or in which the confidence level of the floor identifier/area identifier is less than the preset confidence level.

12. A terminal device, comprising:
at least one memory, configured to store a program; and
at least one processor, configured to execute the program stored in the memory, wherein
when the program stored in the memory is executed, the processor is configured to perform the method according to any one of claims 1 to 11.

13. A computer-readable storage medium, wherein the computer-readable storage medium stores a computer program, and when the computer program is run on a processor, the processor is caused to perform the method according to any one of claims 1 to 11.

14. A computer program product, wherein when the computer program product runs on a processor, the processor is caused to perform the method according to any one of claims 1 to 11.
